# EUROPÄISCHE PATENTSCHRIFT

(11) **EP 1 020 051 B1**
(45) Veröffentlichungstag und Bekanntmachung des Hinweises auf die Patenterteilung: **22.01.2003**
(21) Anmeldenummer: 98945039.0
(22) Anmeldetag: 23.07.1998
(51) Int. Cl.: H04L 12/403, H04L 29/12

(54) **VERFAHREN UND BUSSYSTEM ZUR AUTOMATISCHEN ADRESSVERGABE SOWIE IN DIESES SYSTEM ODER IN DESSEN RAHMEN EINFÜGBARE TELEKOMMUNIKATIONSSTATIONEN**
METHOD AND SYSTEM FOR AUTOMATIC ADDRESS ALLOCATION AND TELECOMMUNICATION STATIONS WHICH CAN BE INSERTED INTO THE BUS SYSTEM OR WITHIN THE FRAMEWORK OF SAID METHOD
PROCEDE ET SYSTEME DE BUS POUR L'AFFECTATION AUTOMATIQUE D'ADRESSES, ET STATIONS DE TELECOMMUNICATION POUVANT ETRE UTILISEES DANS LE SYSTEME DE BUS OU DANS LE CADRE DUDIT PROCEDE

(30) Priorität: 05.08.1997 DE 19733906
(43) Veröffentlichungstag der Anmeldung: 19.07.2000
(73) Patentinhaber: SIEMENS AKTIENGESELLSCHAFT, 80333 München (DE)
(72) Erfinder: LORENZ, Joachim, D-91334 Hemhofen (DE); WEBER, Karl, D-90518 Altdorf (DE)
(86) Internationale Anmeldenummer: DE9802076
(87) Internationale Veröffentlichungsnummer: WO99008164

(56) Entgegenhaltungen:
- EP-A- 0 173 905
- DE-A- 3 736 081
- DE-A- 4 428 502
- JP-A- 8 037 538

## Beschreibung

Die vorliegende Erfindung betrifft ein Verfahren zur automatischen Adreßvergabe in einem Bussystem mit mehreren Kommunikationsteilnehmern bzw. ein Bussystem mit mehreren für eine automatische Adreßvergabe geeigneten Kommunikationsteilnehmern bzw. die Kommunikationsteilnehmer, die in dem Bussystem bzw. im Rahmen des Verfahrens einsetzbar sind. Dabei handelt es sich bei dem Kommunikationssystem um ein Bussystem, bei dem für die Kommunikationsteilnehmer selbst keine Mittel zur Adreßvergabe, wie z.B. elektronische oder mechanische Schalter, Mittel zur Signalverzögerung, etc., vorgesehen sind.

Ein Verfahren zur automatischen Adreßvergabe bei dem die an den Bus angeschlossenen Kommunikationsteilnehmer jeweils selbst Mittel zur Adreßvergabe aufweisen, ist z.B. mit dem Automatisierungsgerät S7-300 der SIEMENS Aktiengesellschaft bekannt, bei dem die an den Bus angeschlossenen Kommunikationsteilnehmer z.B. elektrisch aktive Komponenten aufweisen, mit denen für den jeweiligen Kommunikationsteilnehmer bewirkbar ist, daß sich eine von einem übergeordneten Kommunikationsteilnehmer ausgesandte Signalfolge am jeweiligen Kommunikationsteilnehmer anders darstellt, als bei eventuell an dem Bus weiter vorhandenen Kommunikationsteilnehmern. Dabei ist z.B. gewährleistet, daß die vom übergeordneten Kommunikationsteilnehmer ausgesandte Signalfolge zunächst nur bis zum ersten Kommunikationsteilnehmer gelangt; dieser Kommunikationsteilnehmer modifiziert die empfangene Signalfolge, leitet daraus seine eigene Adresse ab und leitet die modifizierte Signalfolge an den nächstkommenden Kommunikationsteilnehmer erst dann weiter, wenn die Modifikation der Signalfolge und die Ableitung der Adresse abgeschlossen ist. Der zweite Kommunikationsteilnehmer am Bus verfährt nach dem gleichen Verfahren.

Ein Verfahren zur automatischen Adreßvorgabe ist ferner für einen übergeordneten Kommunikationsteilnehmers, der zur kommunikativen Verbindung mit weiteren Kommunikationsteilnehmern jeweils einen sogenannten port aufweist, bekannt, wobei jeder der Kommunikationsteilnehmer mit jeweils einem dieser ports des übergeordneten Kommunikationsteilnehmers verbindbar ist, wobei implizit über die Verbindung mit dem jeweiligen port die Adresse des jeweiligen Kommunikationsteilnehmers festgelegt ist. Derartige sternförmige Verbindungen werden auch Punkt-zu-Punkt-Verbindungen genannt und kommen beispielsweise beim Anschluß von Peripherigeräten an einen Personalcomputer zum Einsatz.

Eine automatische Adreßvergabe ist in bisher für Kommunikationssysteme, insbesondere Bussysteme, insbesondere serielle Bussystemen, bei denen für die einzelnen Kommunikationsteilnehmer keine Mittel zur Adreßvergabe vorgesehen sind, nicht möglich.

Ferner darf in einem Bussystem aufgrund der Topologie eine Adresse, auch eine Default-Adresse, nur einmal vorkommen, da sonst eine eineindeutige Identifizierbarkeit der Kommunikationsteilnehmer, und damit eine eindeutige Datenübertragung, nicht möglich ist.

Darüber hinaus ist bei bisher bekannten Bussystemen das gleichzeitige Aufnehmen mehrerer Kommunikationsteilnehmer in das Bussystem nicht möglich. Neu hinzukommende Kommunikationsteilnehmer sind grundsätzlich anhand einer vorgebbaren Default-Adresse als neue Kommunikationsteilnehmer erkennbar, so daß im Falle des gleichzeitigen Hinzunehmens mehrerer Kommunikationsteilnehmer mit identischen Default-Adressen eine Mehrdeutigkeit vorliegt, die das gleichzeitige automatische Aufnehmen mehrerer Kommunikationsteilnehmer unmöglich macht. Ein ähnliches Problem ergibt sich auch beim Tausch von defekten Kommunikationsteilnehmern, sofern beim Tausch ein Kommunikationsteilnehmer mit bereits vergebener Adresse an das Kommunikationssystem angeschlossen wird.

Die Aufgabe der vorliegenden Erfindung besteht folglich darin, ein Verfahren zur automatischen Adreßvergabe in einem Bussystem der oben genannten Art mit mehreren Kommunikationsteilnehmern bzw. ein Bussystem mit mehreren für eine automatische Adreßvergabe geeigneten Kommunikationsteilnehmern bzw. die in dem Bussystem bzw. im Rahmen des Verfahrens einsetzbaren Kommunikationsteilnehmer anzugeben, mit denen die oben genannten Probleme vermieden werden.

Diese Aufgabe wird gelöst mittels eines Verfahrens zur automatischen Adreßvergabe in einem Kommunikationssystem mit mehreren Kommunikationsteilnehmern, von denen mindestens einer, im folgenden Master, eine übergeordnete Funktion wahrnimmt, wobei der Master zur Adreßvergabe eine Signalfolge, im folgenden Präambel, aussendet, die von den verbleibenden Kommunikationsteilnehmern, im folgenden Slaves, empfangen wird, wobei jeder Slave, dem noch keine Adresse zugeordnet wurde, als Antwort auf die Präambel unverzüglich eine Signalfolge aussendet, wobei derjenige Slave, der die Präambel zeitlich zuletzt empfängt, anhand der Tatsache, daß nach der von ihm ausgesandten Signalfolge innerhalb einer vorgegebenen Zeit keine weiteren Aktionen in dem Kommunikationssystem stattfinden, erkennt, daß vom Master aus gesehen in dem Kommunikationssystem räumlich nach ihm keine weiteren Slaves ohne Adreßzuordnung vorhanden sind und daraufhin in einen Betriebsmodus B schaltet, der den Empfang eines Tauftelegramms vom Master ermöglicht, mit dem die Adreßvergabe für diesen Slave erfolgt, wobei die weiteren Slaves ohne Adreßzuordnung, die nach ihrer eigenen Antwort Aktionen in dem Kommunikationssystem erkennen, erneut auf die Präambel des Masters warten.

Gleichfalls wird diese Aufgabe durch ein Kommunikationssystem mit mehreren für eine automatische Adreßvergabe geeigneten Kommunikationsteilnehmern, von denen mindestens einer, im folgenden Master, eine übergeordnete Funktion wahrnimmt, gelöst, wobei der Master zur Aussendung einer Signalfolge zur Adreßvergabe, im folgenden Präambel, geeignet ist, wobei die verbleibenden Kommunikationsteilnehmer, im folgenden Slaves, denen noch keine Adresse zugeordnet wurde, zur unverzüglichen Aussendung einer Signalfolge als Antwort auf die Präambel geeignet sind, wobei jeder Slave zur Überwachung des Kommunikationssystems nach dem Empfang der Präambel geeignet ist, wobei zumindest eine von einem Slave ausgesandte Signalfolge für die anderen Slaves als Aktion in dem Kommunikationssystem auswertbar ist, wobei das Ausbleiben der Aktion in dem Kommunikationssystem während einer vorgebbaren Zeitspanne für den betreffenden Slave dahingehend auswertbar ist, daß vom Master aus gesehen in dem Kommunikationssystem räumlich nach ihm keine weiteren Slaves ohne Adreßzuordnung vorhanden sind, so daß der betreffende Slave in einen Betriebsmodus schaltbar ist, der den Empfang eines Tauftelegramms vom Master ermöglicht, mit dem die Adreßvergabe für diesen Slave bewirkbar ist.

Für die Kommunikationsteilnehmer wird die Aufgabe einerseits durch einem übergeordneten Kommunikationsteilnehmer, im folgenden Master, der zur automatischen Adreßvergabe in einem Kommunikationssystem mit weiteren Kommunikationsteilnehmern, im folgenden Slaves, geeignet ist, gelöst, wobei der Master mindestens
- zur Aussendung einer Signalfolge zur Einleitung der Adreßvergabe, im folgenden Präambel,
- zum Empfang einer Antwortsignalfolge, die von einem der Slaves als Reaktion auf die Präambel aussendbar ist, und
- zur Aussendung eines Tauftelegramms an den Sender der Antwortsignalfolge geeignet ist
und andererseits mit einem Kommunikacionsteilnehmer, im folgenden Slave, gelöst, der zum Einsatz einer im Kommunikationssystem mit automatischer Adreßvergabe, bewirkbar durch einen übergeordneten Kommunikationsteilnehmer, im folgenden Master, vorgesehen ist, wobei er
- in einem Konfigurationsmodus,
   - in dem er zur unverzüglichen Aussendung einer Signalfolge als Antwort auf eine vom Master aussendbare Präambel und zur Überwachung des Kommunikationssystems nach dem Empfang der Präambel geeignet ist,
   - wobei zumindest eine von einem anderen Slave ausgesandte Antwortsignalfolge für den Slave als Aktion in dem Kommunikationssystem auswertbar ist und wobei das Ausbleiben der Aktion in dem Kommunikationssystem während einer vorgebbaren Zeitspanne für den Slave dahingehend auswertbar ist, daß vom Master aus gesehen in dem Kommunikationssystem räumlich nach ihm keine weiteren Slaves ohne Adreßzuordnung vorhanden sind, und der Slave daraufhin in einen Betriebsmodus schaltbar ist,
- und dem Empfangsmodus betreibbar ist, der mindestens den Empfang eines Tauftelegramms vom Master ermöglicht, mit dem die Adreßvergabe für den Slave bewirkbar ist.

Wenn anhand der Anzahl der von den Slaves gesendeten Antwortsignalfolgen die Anzahl der Slaves, denen noch keine Adresse zugeordnet ist, erkannt wird bzw. erkennbar ist, kann besonders leicht bewirkt werden, daß das Verfahren zur automatischen Adreßvergabe genau so oft ausgeführt wird, bis sämtlichen Slaves eine eindeutige Adresse zugeordnet ist.

Wenn der Master nach dem Taufen eines Slaves erneut eine Präambel aussendet, sofern feststeht, daß in dem Kommunikationssystem noch Slaves vorhanden sind, denen noch keine Adresse zugeordnet ist, ist sichergestellt, daß jedem Slave, dem noch keine Adresse zugeordnet ist, eine Adresse zugeordnet wird.

Wenn der Master während des Betriebs des Kommunikationssystems zu vorgebbaren Zeitpunkten bzw. in einem vorgebbaren Zeitraster erneut eine Präambel aussendet, ist sichergestellt, daß auch während des Betriebs des Kommunikationssystems neu hinzukommenden Kommunikationsteilnehmern eine Adresse zugeordnet wird.

Wenn die Adressen der Slaves in einer dem Abstand vom Master entsprechenden auf- oder absteigenden Reihenfolge vergeben werden, beinhaltet jede Adresse eines Slaves implizit eine relative Positionsinformation, die z.B. im Rahmen einer Fehlerlokalisierung auswertbar ist. So steht z.B. fest, wenn ein Slave mit der Adresse X erreichbar ist, der Slave mit der Adresse X+1 hingegen nicht mehr erreichbar ist, daß das Kommunikationssystem, z.B. die Busleitung, zwischen dem Slave mit der Adresse X und dem Slave mit der Adresse X+1 gestört, beschädigt oder unterbrochen sein muß.

Wenn anhand der Adressen der einzelnen Slaves eine Abbildung der Topologie der an den Bus angeschlossenen Slaves generierbar ist, können diese Informationen beispielsweise einem Projektierungswerkzeug zur Verfügung gestellt werden, so daß, wenn das Kommunikationssystem z.B. im Rahmen eines Automatisierungsvorhabens zur Steuerung und/oder Überwachung eines technischen Prozesses eingesetzt wird, ein geografisches Prozeßabbild erzeugt werden kann.

Weitere Vorteile und erfinderische Einzelheiten ergeben sich aus der nachfolgenden Beschreibung eines Ausführungsbeispiels.

Dabei zeigen:
- FIG 1: eine vereinfachte Struktur eines Kommunikationssystems mit übergeordnetem Kommunikationsteilnehmer, Master, und nachgeordneten Slaves,
- FIG 2: eine schematische Darstellung der Abläufe bei der Ausführung des erfindungsgemäßen automatischen Adreßvergabeverfahrens,
- FIG 3: ein Blockschaltbild des Masters,
- FIG 4: ein Blockschaltbild des Slaves und
- FIG 5: ein Flußdiagramm zu den Vorgängen bei der erfindungsgemäßen Adreßvergabe für den Slave.

Die Erfindung befaßt sich mit einer automatischen Adreßvergabe in einem Kommunikationssystem. Im Ausführungsbeispiel wird als Kommunikationssystem exemplarisch der Profibus behandelt. Die vorliegende Erfindung ist jedoch keinesfalls auf dem Profibus beschränkt, sondern ist vorteilhaft auch in anderen Bussystemen der oben genannten Art einsetzbar, insbesondere im Falle von Bussystemen mit Busleitungen, bei denen keine teilnehmerbezogenen verzögernden Elemente vorgesehen sind, bei denen also Signalfolgen, die über den Bus übertragen werden, quasi zeitgleich bei den jeweiligen Kommunikationsteilnehmern anstehen und damit eine Signalfolge, ausgehend von einem Sender durch einem ersten Teilnehmer nicht derart beeinflußbar ist, daß ein nachfolgender Teilnehmer eine veränderte Signalfolge wahrnimmt.

Bisher ist beim Profibus eine automatische Vergabe von Adressen der Kommunikationsteilnehmer nicht möglich, da beim Profibus eine von dem übergeordneten Kommunikationsteilnehmer, dem Master, ausgesandte Signalfolge quasi zeitgleich bei sämtlichen Slaves ansteht. Wäre diese Signalfolge für die Adreßvergabe vorgesehen, würden sämtliche Slaves auf ein und dieselbe Signalfolge gleichartig reagieren; eine eineindeutige Unterscheidung ist mithin nicht erreichbar.

Die erfindungsgemäße automatische Adreßvergabe, die nachfolgend exemplarisch für den Profibus weiter erläutert wird, basiert auf einer Distanzmessung auf dem Medium, wobei das Übertagungsmedium und damit die Signalausbreitungsgeschwindigkeiten keine Rolle spielen, so können zur EN50170 konforme Kabel, Lichtwellenleiter und Stecker eingesetzt werden.

Mit Hilfe des erfindungsgemäßen Verfahrens kann ein Kommunikationssystem mit mehreren Kommunikationsteilnehmern automatisch in Betrieb genommen werden. Es ist möglich, kollisionsfrei und ohne Absturz und Rekonfigurierung des Kommunikationssystems sämtliche für die automatische Adreßvergabe vorgesehenen und vorbereiteten Kommunikationsteilnehmer mit einer Teilnehmeradresse zu versehen und in den Bus aufzunehmen.

Ferner ist mittels des erfindungsgemäßen Verfahrens eine Zuordnung der Teilnehmeradresse zum geografischen Einbauort möglich.

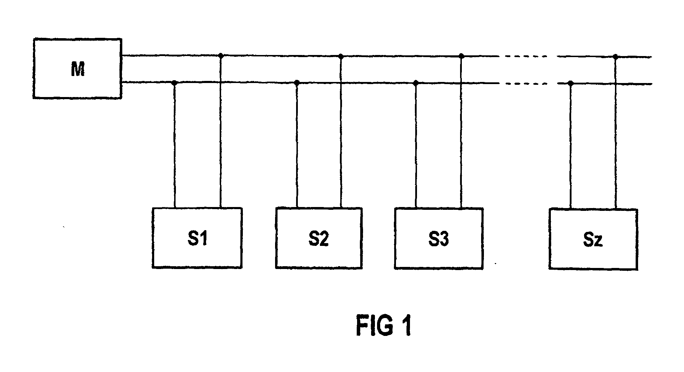

FIG 1 zeigt eine einfache Darstellung der Struktur eines Kommunikationssystems. An das Kommunikationssystem ist ein übergeordneter Kommunikationsteilnehmer M, der Master M, und mindestens ein weiterer Kommunikationsteilnehmer S1, S2,..., im folgenden Slave S1, S2,..., angeschlossen.

Eine vom Master M ausgesandte Signalfolge gelangt grundsätzlich zu allen an den Bus angeschlossenen Slaves, S1, S2,.... Eine dedezierte Kommunikation zwischen einem Master M und einem Slave S1, S2,... bzw. gegebenenfalls zwischen zwei Slaves S1, S2,... untereinander ist erst dann möglich, nachdem den Slaves S1, S2, ... eine eindeutige Adresse zugewiesen wurde, anhand derer für diese jeweils erkennbar ist, daß eine Signalfolge, die wie beschrieben, grundsätzlich zu jedem Kommunikationsteilnehmer S1, S2,... gelangt, genau für einen speziellen Kommunikationsteilnehmer M, S1, S2,... bestimmt ist.

Aus diesem Grunde läuft auch das erfindungsgemäße Verfahren zur automatischen Adreßvergabe, bei dem also mindestens einem Slave S1, S2, ... noch keine Adresse zugeordnet ist, und also dieser mindestens eine Slave S1, S2, ... nicht eindeutig über eine Adresse ansprechbar ist, quasi "protokollfrei".

Wie weiter unten eingehend erläutert werden wird, weisen die für die Anwendung des erfindungsgemäßen Verfahrens ertüchtigten Slaves S1, S2,... zu diesem Zweck Sende- und Empfangsmittel auf, die während des protokollfreien Betriebs, der im folgenden als Konfigurationsmodus K bezeichnet wird, zum Einsatz kommen. Darüber hinaus weisen Sie selbstverständlich auch die üblichen Sende- und Empfangsmittel auf, die im normalen Empfangsbetrieb zum Einsatz, bei dem das Senden und Empfangen von Signalfolgen möglich ist, die dem für das jeweilige Übertragungsmedium definierten Busprotokoll genügen. Dieser normale Empfangsmodus wird im folgenden als Betriebsmodus B bezeichnet.

Während der automatischen Adreßvergabe, während sich also die Slaves S1, S2,..., denen bisher noch keine Adresse zugewiesen wurde, im Konfigurationsmodus K befinden, belegt der Master, der das erfindungsgemäße Verfahren zur automatischen Adreßvergabe initiiert, den Bus um eine Signalfolge auszusenden und gegebenenfalls den Empfang von Antwortsignalfolgen zu überwachen. Die Slaves S1, S2, ..., die während des Betriebs im Konfigurationsmodus K an kein Busprotokoll gebunden sind, detektieren empfangene Signalfolgen entsprechend ihrer zur Ausführung des erfindungsgemäßen Verfahrens geeigneten internen Verschaltung und senden darüber hinaus gegebenenfalls eigene Signalfolgen als Reaktion auf die empfangenen Signalfolgen aus, ohne dabei eventuellen weiteren Datenverkehr auf den Kommunikationsmedium berücksichtigen zu müssen.

Der Master M, im Ausführungsbeispiel der Profibus-Master M, sendet zur automatischen Adreßvergabe eine bestimmte Signalfolge P, die Präambel P, über das Kommunikationssystem, den Profibus, aus und überwacht gleichzeitig das eventuelle Eintreffen von Antworten A als Reaktion auf diese Präambel P.

Die für die automatische Adreßvergabe vorgesehenen Slaves S1, S2,... denen bisher keine eindeutige Adresse zugewiesen wurde, verbleiben bis zur Zuweisung einer eindeutigen Adresse im Konfigurationsmodus K, der einen Empfang, eine Detektion und eine unverzügliche Reaktion auf die Präambel P ermöglicht.

Der dem Master M räumlich in Bezug auf die Kommunikationsleitung am nächsten liegende Slave S1 empfängt und erkennt die Präambel P zeitlich als erster und antwortet unverzüglich mit einer minimalen Verzögerung, indem er eine Antwortsignalfolge A aussendet.

Währenddessen läuft das Signal P, die Präambel P, weiter zum nächsten Slave S2. Der Slave Sz, der entlang der Busleitung am weitesten vom Master M entfernt ist, empfängt die Präambel P zeitlich als letzter. Auch dieser letzte Slave Sz sendet als Antwort auf die Präambel P unmittelbar eine Antwortsignalfolge A.

Alle räumlich vor diesem letzten Slave Sz liegenden Slaves S1, S2, ... haben die Präambel P bereits zeitlich vor diesem Slave Sz erhalten und erkennen anhand der Tatsache, daß - nachdem sie selbst auf die Präambel P mit ihrer Antwortsignalfolge A geantwortet haben - auch noch zu einem späteren Zeitpunkt eine Antwortsignalfolge A über den Bus läuft - nämlich die Antwortsignalfolge A des am weitesten entfernten Slaves Sz -, räumlich nach ihnen noch ein weiterer Kommunikationsteilnehmer Sz ohne Adresse an das Kommunikationssystem angeschlossen ist.

Die vor diesem letzten Slave Sz liegenden Kommunikationsteilnehmer S1, S2,... erkennen also, daß sie selbst nicht der letzte Slave an der Kommunikationsleitung sind, wohingegen der letzte Slave Sz nach dem Aussenden seiner Antwortsignalfolge A noch eine bestimmte, vorgebbare Zeit den Bus überwacht und anhand der Tatsache, daß während des Verstreichens dieser Zeit keine weiteren Aktionen auf den Bus stattfinden - d.h. also z.B. keine weitere Antwortsignalfolge A über den Bus übertragen wird -, daß er tatsächlich der letzte Kommunikationsteilnehmer (ohne Adreßvorgabe) am Bus ist.

Der Konfigurationsmodus K gliedert sich dabei, wie vorstehend erläutert, in drei voneinander unabhängige Phasen, wobei in der ersten Phase P1 die Präambel P erkannt wird, in der zweiten Phase P2 als Antwort auf die Präambel P die Antwortsignalfolge A ausgesandt wird und in der dritten Phase P3 der Bus überwacht wird, wobei jede Aktion auf dem Bus, die in dieser dritten Phase P3 detektiert wird, aus Sicherheitsgründen dazu führt, daß der jeweilige Slave S1, S2, ... diesen Umstand dahingehend auswertet, daß sich noch weitere Slaves S1, S2, ... ohne Adreßvorgabe räumlich nach ihm befinden und folglich wieder in die erste Phase P1 des Konfigurationsmodus K zurückfällt, die den Empfang und die Detektion der Präambel P ermöglicht.

Nachdem für den betreffenden Slave Sz eindeutig feststeht, daß er tatsächlich der letzte Kommunikationsteilnehmer am Bus ist, schaltet der Slave Sz von seiner gegenwärtigen Betriebsart, dem Konfigurationsmodus K, der das Erkennen der Präambel P und das darauffolgende Aussenden der Antwortsignalfolge A ermöglicht, in einen Betriebsmodus B, der den Empfang eines Tauftelegramms T vom Master M ermöglicht, mit dem die Adreßvergabe für diesen Slave S1, S2,... erfolgt.

Die verbleibenden Slaves S1, S2, ... ohne Adreßzuordnung verbleiben weiterhin im Konfigurationsmodus K, so daß sie das Tauftelegramm T des Masters M nicht auswerten bzw. gar nicht registrieren und warten auf eine erneute Präambel P des Masters M.

Beim nächsten Durchlauf des Verfahrens reagiert der gerade getaufte Slave Sz der sich ja nunmehr im normalen Betriebsmodus B befindet, nicht mehr auf die Präambel P und wird folglich - auch wenn eine Präambel P durch den Master M über den Bus geschickt wird - auf die Präambel P nicht mehr reagieren, insbesondere nicht mehr mit einer Antwortsignalfolge A reagieren. Aus diesem Grunde wird also gemäß dem oben beschriebenen Verfahren der dem zuvor getauften Slave Sz unmittelbar vorangehende Slave S1, S2,... beim Empfang einer neuen Präambel P die Konstellationen auf dem Bus derart auswerten, daß er selbst der letzte Kommunikationsteilnehmer ohne Adreßzuweisung am Bus ist, und entsprechend in den normalen Betriebsmodus B schalten, der wiederum den Empfang des Tauftelegramms T ermöglicht.

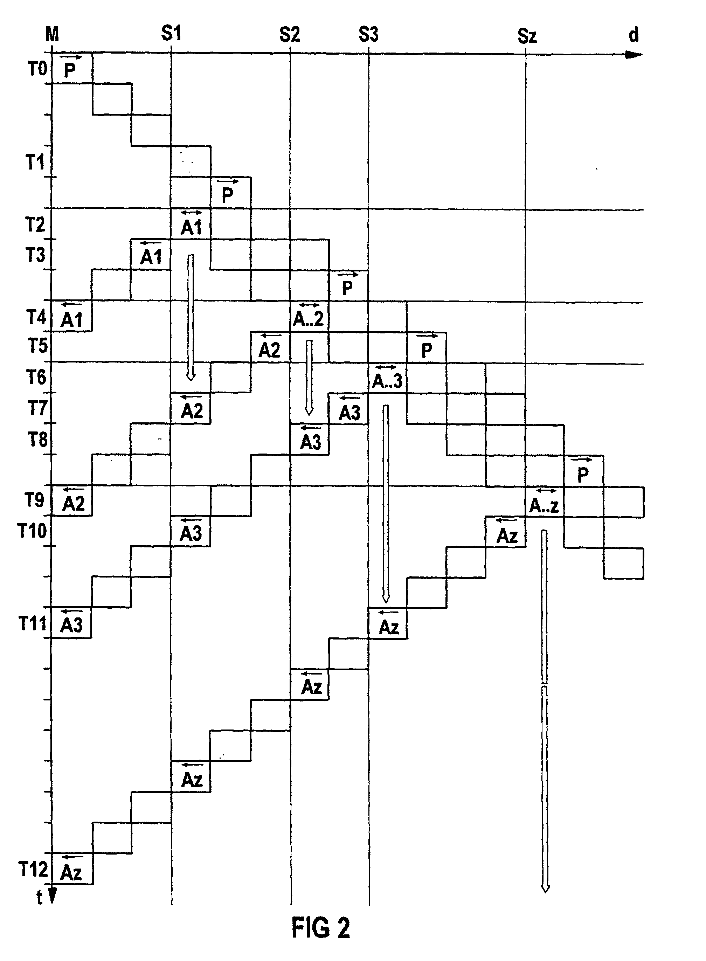

Nachfolgend wird der Ablauf des erfindungsgemaßen Verfahrens anhand der Darstellung in FIG 2, die exemplarisch ein Orts-Zeit-Diagramm für ein Bussystem mit vier Slaves S1, S2, S3...Sz zeigt, nochmals erläutert:

Auf der Abszisse der FIG 2 sind die Kommunikationsteilnehmer, der Master M und die Slaves S1, S2, S3...Sz dargestellt. Auf der Ordinate sind Zeitwerte, T0, T1...T11 dargestellt.

Zum Zeitpunkt T0 sendet der Master M die Präambel P. Die Präambel P trifft zum Zeitpunkt T1 beim Slave S1 ein. Der Slave S1 sendet zum Zeitpunkt T2 als Reaktion auf die Präambel P eine Antwortsignalfolge A1 aus, die sich - siehe FIG 1 - sowohl in Richtung der weiteren Kommunikationsteilnehmer S2, S3...Sz, als auch in Richtung auf den Master M am Bus ausbreitet. Darüber hinaus wird natürlich auch die Präambel P am Bus in Richtung auf die weiteren Slaves S2, S3...Sz übertragen.

Zum Zeitpunkt T3 empfängt der Slave S2 die vom Master M ausgesandte Präambel P, dabei wird die später eintreffende Antwortsignalfolge A1 des Slaves S1 vom Slave S2 nicht erkannt bzw. nicht ausgewertet, denn das Überwachen des Busses durch den jeweiligen Slave S1, S2, ... erfolgt erst in der dritten Phase P3 des Konfigurationsmodus K. Der Slave S2 reagiert zum Zeitpunkt T4 auf die empfangene Präambel P mit dem Aussenden der Antwortsignalfolge A2, die sich wiederum in Richtung auf die vorangegangenen Kommunikationsteilnehmer M, S1 wie auch in Richtung der weiteren Slaves S3...Sz ausbreitet und sich dabei mit der vom ersten Slave S1 ausgesandten Antwortsignalfolge A1 weitestgehend überlappt (A...2).

Zum Zeitpunkt T5 erreicht die Präambel den Slave S3. Etwa zu diesem Zeitpunkt erreicht die vom Slave S1 ausgesandte Antwortsignalfolge A1 den Master M. Der Slave S3 reagiert zum Zeitpunkt T6 auf die empfangene Präambel P mit dem Aussenden der Antwortsignalfolge A3, die sich wiederum in Richtung des weiteren Slaves Sz wie auch in Richtung auf die vorangegangenen Kommunikationsteilnehmer M, S1, S2 ausbreitet (A3, A...3).

Zum Zeitpunkt T7 erreicht die vom Slave S2 ausgesandte Signalfolge A2 den Slave S1, der nach dem Aussenden der eigenen Antwortsignalfolge A1 vom Zeitpunkt T2 bis zum Zeitpunkt T7 in der dritten Phase P3 des Konfigurationsmodus K den Bus auf Aktionen überwacht hat und die vom Slave S2 ausgesandte Antwortsignalfolge A2 als Aktion auf den Bus erkennt, so daß damit für den Slave S1 feststeht, daß er selbst nicht der vom Master M aus gesehen letzte Kommunikationsteilnehmer am Kommunikationsmedium ist. Der Slave S1 fällt daraufhin im Konfigurationsmodus K wieder in die erste Phase P1 zurück, die den erneuten Empfang, die Detektion und die Reaktion auf eine vom Master M ausgesandte Präambel P ermöglicht.

Zum Zeitpunkt T8 erreicht die vom Slave S3 ausgesandte Signalfolge A3 den Slave S2, der dies gleichfalls - analog zur soeben geschilderten Situation - als Aktion auf dem Bus auswertet und erneut auf eine Präambel P wartet.

Zum Zeitpunkt T9 erreicht die vom Slave S2 ausgesandte Antwortsignalfolge A2 den Master M.

Zum Zeitpunkt T10 erreicht die vom Slave S3 ausgesandte Antwortsignalfolge A3 den Slave S1, der sich jedoch bereits wieder in der ersten Phase P1 des Konfigurationsmodus K befindet und folglich nicht auf die Antwortsignalfolge A3 reagiert.

Bereits zum Zeitpunkt T8 hat die Präambel P den letzten Slave Sz erreicht. Dieser regiert zum Zeitpunkt T9 mit dem Aussenden der Antwortsignalfolge Az. Diese erreicht zum Zeitpunkt T11 den vor dem letzten Slave Sz liegenden Slave S3, der daraufhin - genau wie zuvor bereits die Slaves S1 und S2 - in die erste Phase P1 des Konfigurationsmodus K zurückschaltet, so daß damit auch für den Slave S3 feststeht, daß er selbst nicht der vom Master M aus gesehen letzte Kommunikationsteilnehmer am Kommunikationsmedium ist. Zum Zeitpunkt T12 trifft die vom letzten Slave Sz ausgesandte Antwortsignalfolge Az beim Master M ein.

Da der Slave Sz der letzte Kommunikationsteilnehmer am Bus ist, empfängt nach diesem kein weiterer Kommunikationsteilnehmer die Präambel P. Folglich ist die vom letzten Slave Sz in Richtung auf den Master M über den Bus laufende Antwortsignalfolge Az die letzte mit der aktuellen Präambel P ausgelöste Antwortsignalfolge A. Der letzte Slave Sz empfängt also selbst beim aktuellen Durchlauf des erfindungsgemäßen Verfahrens keine Antwortsignalfolge A. Nach dem Aussenden der eigenen Antwortsignalfolge Az erkennt der letzte Slave Sz, der während der dritten Phase P3 seines Konfigurationsmodus K während einer vorgebbaren Zeit den Bus überwacht keine Aktionen, insbesondere keine Antwortsignalfolgen A, am Bus. (Die dritte Phase P3 des Konfigurationsmodus K ist für die jeweiligen Slaves S1, S2, ... in FIG 2 jeweils mit dem vertikalen Pfeil angedeutet.) Nach Verstreichen dieser vorgebbaren Zeitspanne wertet der letzte Slave Sz die Tatsache des Nichteintreffens von Antwortsignalfolgen A von eventuellen weiteren Kommunikationsteilnehmern dahingehend aus, daß er selbst der vom Master M ausgesehen letzte Kommunikationsteilnehmer am Bus ist. Der Slave Sz schaltet daraufhin aus dem Konfigurationsmodus K in dem Betriebsmodus B um.

Der Master M registriert das Eintreffen der Antwortsignalfolgen A, wobei die Antwortsignalfolge A1 des Slaves S1 gemäß FIG 2 z.B. zum Zeitpunkt T4 eintrifft, diejenige des Slaves S2 gemäß FIG 2 z.B. zum Zeitpunkt T9, diejenige des Slaves S3 gemäß FIG 2 z.B. zum Zeitpunkt T11 usw.. Wenn der Master M während einer gleichfalls vorgebbaren Zeitspanne kein weiteres Eintreffen einer Antwortsignalfolge A detektiert, so steht fest, daß die letzte eingetroffene Antwortsignalfolge A die Antwortsignalfolge Az des vom Master M ausgesehen weitest entfernten Kommunikationsteilnehmers Sz ist. Dabei ist die vorgebbare Zeitspanne, während derer der Master M das Eintreffen von Antwortsignalfolgen A überwacht, im wesentlichen durch die maximal mögliche Ausdehnung des Kommunikationsmediums bestimmt.

Anhand der Zeitdifferenz zwischen dem Aussenden der Präambel zum Zeitpunkt T0 und dem Zeitpunkt Tₓ - gemäß FIG 2 z.B. der Zeitpunkt T12 - des Eintreffens der letzten Antwortsignalfolge Az ist die Entfernung des letzten Kommunikationsteilnehmers Sz vom Master M ermittelbar. In Abhängigkeit von dieser Entfernung bzw. in Abhängigkeit von der Anzahl der am Kommunikationsmedium insgesamt vorhandenen Slaves S1, S2,... ohne Adreßvergabe, wird dem jeweils letzten Kommunikationsteilnehmer Sz eine eindeutige Adresse zugewiesen.

Dies erfolgt mittels eines vom Master M ausgesandten Tauftelegramms T, das von den anderen Slaves ohne Adreßzuordnung S1, S2,... die wieder in die erste Phase P1 des Konfigurationsmodus K zurückgefallen sind, nicht ausgewertet wird, jedoch vom jeweils letzten Kommunikationsteilnehmer, der sich nach Beenden der dritten Phase P3 des Konfigurationsmodus K nunmehr in den Betriebsmodus B geschaltet hat, empfangen und ausgewertet wird. Dieser Sachverhalt ist in FIG. 2 nicht mehr dargestellt.

Das Tauftelegramm T ist dabei so definiert, daß eventuelle am Kommunikationsmedium bereits vorhandene Slaves mit Adreßzuordnung auf dieses Tauftelegramm T nicht reagieren.

Auf diese Weise kann der Master M nach und nach nach dem oben beschriebenen erfindungsgemäßen Verfahren alle Slaves S1, S2, ... am Bus taufen. Dabei werden die Adressen der Slaves S1, S2, ... beispielsweise in einer dem Abstand vom Master M entsprechenden auf- oder absteigenden Reihenfolge vergeben, wobei z.B. im Fall einer absteigenden Reihenfolge beim ersten Durchlauf des erfindungsgemäßen Verfahrens demjenigen Slave S1, S2, ..., der sich zuerst für den Empfang des Tauftelegramms T bereitschaltet, als Adresse ein vorgebbarer Startwert zugewiesen wird, der sukzessive bei jeder neuen Durchführung des Verfahrens inkrementiert wird. Werden dagegen die Adressen in einer dem Abstand vom Master M entsprechenden aufsteigenden Reihenfolge vergeben, wird z.B. entweder demjenigen Slave S1, S2, ..., der sich als erster für den Empfang des Tauftelegramms T bereitstellt, als Startadresse ein vorgebbarer Wert zugewiesen, der bei jeder weiteren Ausführung des Verfahrens dekrementiert wird, oder der vorgebbare Wert wird in Anlehnung an die von den Slaves S1, S2,... beim erstmaligen Durchführen des erfindungsgemäßen Verfahrens gesendeten Antwortsignalfolgen A, aus denen die Anzahl der Slaves S1, S2, ..., denen noch keine Adresse zugeordnet ist, ableitbar ist, gebildet.

Zur Durchführung des erfindungsgemäßen Verfahrens sind die Kommunkationsteilnehmer, der Master M und die Slaves S1, S2, ... erfindungsgemäß folgendermaßen ausgestaltet:

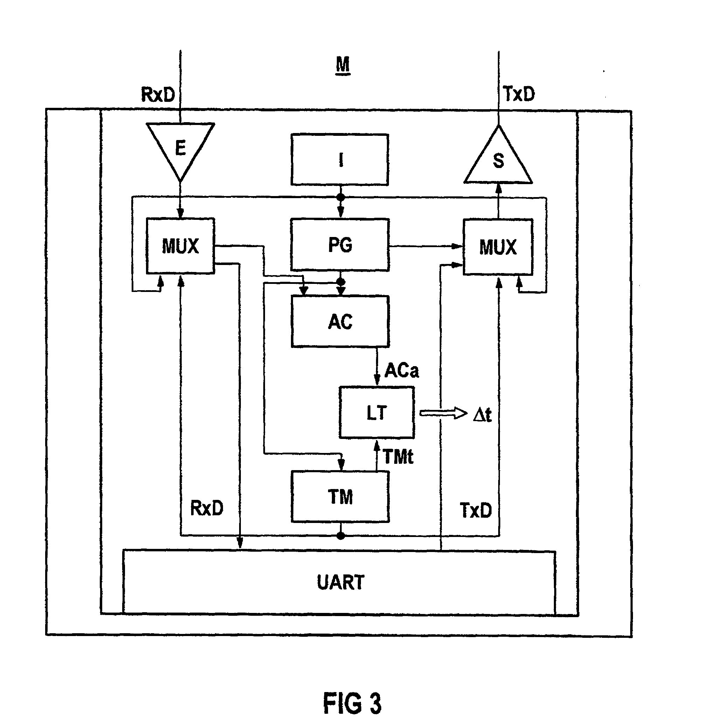

Der Master M verfügt gemäß FIG 3 über einen Sendekanal S und einen Empfangskanal E. Über den Sendekanal S werden die zu sendenden Daten TxD und über den Empfangskanal die empfangenen Daten RxD übertragen. Zum Aussenden der Präambel P weist der Master M einen Präambelgenerator PG auf. Die Präambel P gelangt über einen Ausgang des Präambelgenerators PG zum sendekanalseitigen Multiplexer MUX. Das Aussenden der Präambel P wird von einer Aktivierungs-/Initialisierungslogik I angestoßen. Von der Aktivierungs-/Initialisierungslogik I werden die beiden Multiplexer MUX zunächst so eingestellt, daß der Präambelgenerator PG mit dem Sendekanal S und der Empfangskanal E mit einer Vorrichtung AC (activity control), mit der Aktionen auf den Bus überwacht und erkannt werden, verbunden ist.

Nach dem Aussenden der Präambel P aktiviert der Präambelgenerator PG die Aktivitätskontrolle AC; gleichzeitig wird ein Timer TM gestartet. Werden jetzt nach dem Aussenden der Präambel P am Empfangskanal E Daten empfangen, gelangen diese aufgrund der oben beschriebenen Einstellung des Multiplexers MUX zur Aktivitätskontrolle AC, die daraufhin ein Signal ACa auslöst und das empfangene Signal in einem Latch LT zwischenspeichert. Die Zeit, die zwischen dem Aussenden der Präambel P und der Detektion einer Aktion auf dem Bus - im Rahmen des erfindungsgemäßen Verfahrens, also üblicherweise die Detektion der Antwortsignalfolge A - vergeht, ist anhand des vom Timer TM jeweils gelieferten Zeitsignals TMt ermittelbar.

Da sich die Antwortsignalfolgen A jedoch überlappen können oder aufgrund der jeweiligen Abtastfrequenz des Masters M nicht eindeutig unterscheidbar sind, ist für die Distanzmessung das zeitliche Auftreten in der letzten fallenden Flanke der Antwortsignalfolgen A relevant.

Nach Ablauf einer vorgebbaren Zeitspanne bewirkt der Timer TM das Umschalten sowohl des empfangskanalseitigen wie auch des sendekanalseitigen Multiplexers MUX, so daß die Sendeleitung S, wie auch die Empfangsleitung E, in an sich bekannter Weise mit den Schnittstellenbaustein UART verbunden sind.

Aus der Zeitdifferenz Δt ist damit jeweils mit der Signalausbreitungsgeschwindigkeit auf dem verwendeten Kommunikationsmedium die räumliche Entfernung zwischen dem Master M und einem eine Aktion auf dem Bus hervorrufenden Slave S1, S2, ... ermittelbar. Bei einer Signallaufzeit von 4,2ns/m in Kupfer (Cu) braucht ein Signal vom Senden bis zum Empfang der Antwort pro Entfernungsmeter 8,4ns.

Üblicherweise ist in einem Profibusstecker eine LRC-Kombination als Filter gegen Störungen, z.B. Reflektionen, vorgesehen. Diese Kombination stellt eine Leitung mit ca. 1m Länge dar. Bei einem darüber hinaus technisch bedingten Mindestabstand von 0,5m zwischen den Slaves S1, S2, ... beträgt die Signallaufzeit vom Master bis zum nächstmöglichen Slave S1, S2, ... in Kupfer 1,5x 4,2ns = 6,3ns.

Bis die Antwort den Master M wieder erreicht, vergehen 2x 6,3ns und damit ca. 12,6ns. Zum Abtasten und Messen reicht damit eine Abtastfrequenz von ca. 100 MHz aus.

Die dem jeweiligen Slave S1, S2,... mit dem Tauftelegramm T zuzuweisende Adresse ist damit als Funktion der Entfernung gemäß der oben erläuterten Gesetzmäßigkeiten ausdrückbar. Da zwischen zwei benachbarten Slaves S1, S2, ... ein Mindestabstand bestehen muß, der exemplarisch z.B. 1,0m betrage, ist bei einer Zeitdifferenz Δt - z.B. (2 x 2,5m x 4,2ns/m)= 21,0ns ≤ Δt ≤ (2 x 3,5m x 4,2ns/n)= 29,4ns - zwischen dem Aussenden der Präambel P und dem Detektieren der letzten fallenden Flanke der Antwortsignalfolge(n) A sichergestellt, daß eine Adresse für einen Slaves S1, S2,... der sich im Abstand zwischen 2,5m und 3,5m vom Master M, mithin also an der vom Master M aus gesehen dritten möglichen Position am Bus befindet, zu vergeben ist.

Im Falle des vorstehend behandelten Zahlenbeispiels kann für den Slave z.B. die Adresse "3" vergeben werden, wobei dann die Adresse unmittelbar mit der Position am Bus korrespondiert und somit die Adresse unmittelbar als Positionsinformation auswertbar ist.

Es ist jedoch gleichfalls möglich, daß die Slaves S1, S2,..., wie weiter oben beschrieben, auf- oder absteigend numeriert werden und jeweils eine dieser Numerierung entsprechende Adresse vergeben wird. Damit hat z.B. ein Slave S1 mit einem Abstand von 5m vom Master M die Adresse "1", ein Slave S2 mit einem Abstand von 7m vom Master die Adresse "2" und ein Slave S3 mit einem Abstand von 12m vom Master die Adresse "3". Für diesen Fall verwaltet der Master M vorteilhafterweise eine Lookup-Tabelle LUT der eine Zuordnung zwischen den vergebenen Adressen und den bei der Adreßvergabe ermittelten Zeitdifferenzen Δt entnehmbar ist; LUT = [(1; 5m), (2; 7m), (3; 12m)]. In diesem Falle ist die Positionsinformation der Lookup-Tabelle LUT an der durch die jeweilige Adresse festgelegten Position entnehmbar. Damit ist auch für später hinzukommenden Slaves S1, S2,... die automatische Adressierung und die Ermittlung der Positionsinformation möglich. Ein neu hinzukommender Slave S4 mit einem Abstand von 9m vom Master M kann ohne Umnumerierung der bereits adressierten Slaves S1, S2, S3 nicht mit monoton zu Entfernung vom Master steigender Adresse in den Bus aufgenommen werden; statt dessen wird dem neu hinzukommenden Slave S4 die nächste freie Adresse "4" zugewiesen, wobei jedoch anhand der Laufzeitdifferenz Δt dessen Entfernung zum Master M eindeutig ermittelbar ist, so daß über die Lookup-Tabelle LUT = [(1; 5m), (2; 7m), (3; 12m), (4; 9m)] die Positionsinformation wieder verfügbar ist.

Diese Positionsinformation kann einem Projektierungswerkzeug zur Verfügung gestellt werden, so daß ein geografisches Prozeßabbild erzeugbar ist.

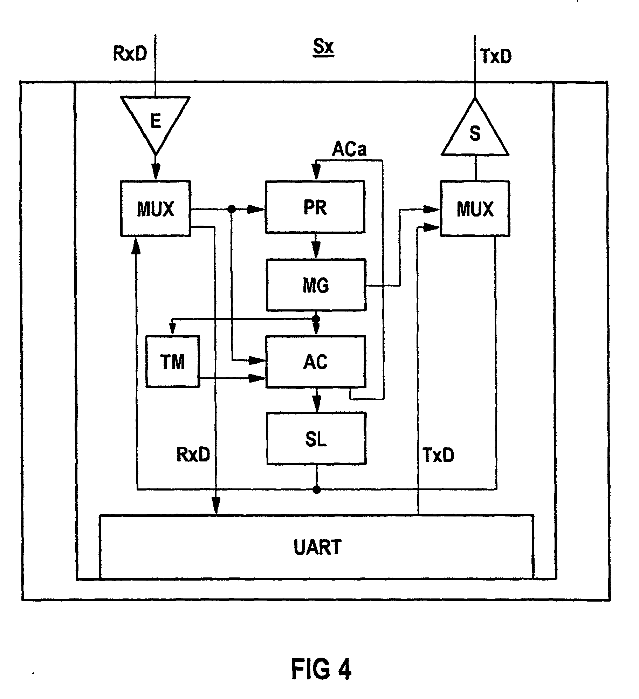

Auch der Slave S1, S2...Sx weist gemäß FIG 4 einen Sendekanal S und einen Empfangskanal E auf. Über den Sendekanal S werden zu sendende Daten TxD, über den Empfangskanal E empfangene Daten RxD übertragen. Sowohl im sendeseitigen wie auch im empfangsseitigen Kanal ist jeweils ein Multiplexer MUX angeordnet. Von einer Schaltlogik SL werden die beiden Mulitplexer MUX zunächst so eingestellt, daß ein Mustergenerator MG zum Generieren z.B. der Antwortsignalfolge A mit der Sendeleitung S verbunden ist. Eine für den Slave Sx spezifische Aktivitätskontrolle AC ist mit dem Empfangskanal E verbunden. Darüber hinaus ist in der so bewirkten Einstellung des empfangskanalseitigen Multiplexers MUX der Empfangskanal E auch mit einer Vorrichtung zur Mustererkennung PR (pattern recognition) verbunden.

Wenn über den Empfangskanal E eine Präambel P zum Slave Sx gelangt, erkennt die Vorrichtung zur Mustererkennung PR, im folgenden Präambeldetektor PR, diese Präambel P und aktiviert den Mustergenerator MG, der eine Antwortsignalfolge A auf den Sendekanal S gibt. Mit dem Aussenden der Antwortsignalfolge A aktiviert der Mustergenerator MG die Aktivitätskontrolle AC des Slaves Sx; gleichzeitig wird ein Timer TM angestoßen. Registriert die Aktivitätskontrolle AC Aktionen auf dem Empfangskanal E, so wird ein Signal ACa generiert, das erneut den Präambeldetektor PR aktiviert, so daß der Slave Sx erneut auf eine Präambel P reagieren kann (Rückfall aus der dritten Phase P3 des Konfigurationsmodus K in die erste Phase P1).

Registriert die Aktivitätskontrolle AC dagegen während einer vorgebbaren Zeitspanne, deren Ablauf durch den Timer TM signalisiert wird, keine Aktionen auf den Bus, ist der Konfigurationsmodus K für diesen Slave Sx beendet. Es wird die Schaltlogik SL aktiviert, die sowohl den empfangskanalseitigen wie auch den sendekanalseitigen Multiplexer MUX derart umschaltet, daß der Empfangskanal E und der Sendekanal S direkt mit den Schnittstellenbaustein UART verbunden sind, so daß der Slave Sx in der Lage ist, reguläre Telegramme, insbesondere das Tauftelegramm T, vom Master M zu empfangen; der Slave Sx befindet sich jetzt im Betriebsmodus B.

Solange ein Slave S1, S2, ... unparametriert ist, ihm also noch keine Adresse zugewiesen ist, befindet er sich im Konfigurationsmodus K, in der während der ersten Phase P1 des Konfigurationsmodus K ein Präambeldetektor PR auf dem Empfangskanal E mithört, während der Sendekanal S mit einem Bitmustergenerator MG verbunden ist.

Erkennt der Präambeldetektor PR eine Präambel P fehlerfrei, so generiert während der zweiten Phase P2 des Konfigurationsmodus K der Bitmustergenerator MG unverzüglich die Antwortsignalfolge A für den Master M.

Empfängt der Slave S1, S2, ... während der darauffolgenden dritten Phase P3 des Konfigurationsmodus K eine bestimmte, vorgebbare Zeit kein weiteres Signal, so steht damit fest, daß er derjenige Slave S1, S2,... ist, der vom Master M räumlich am weitesten entfernt ist und somit der letzte Kommunikationsteilnehmer ohne Adreßzuordnung am Übertragungsmedium ist.

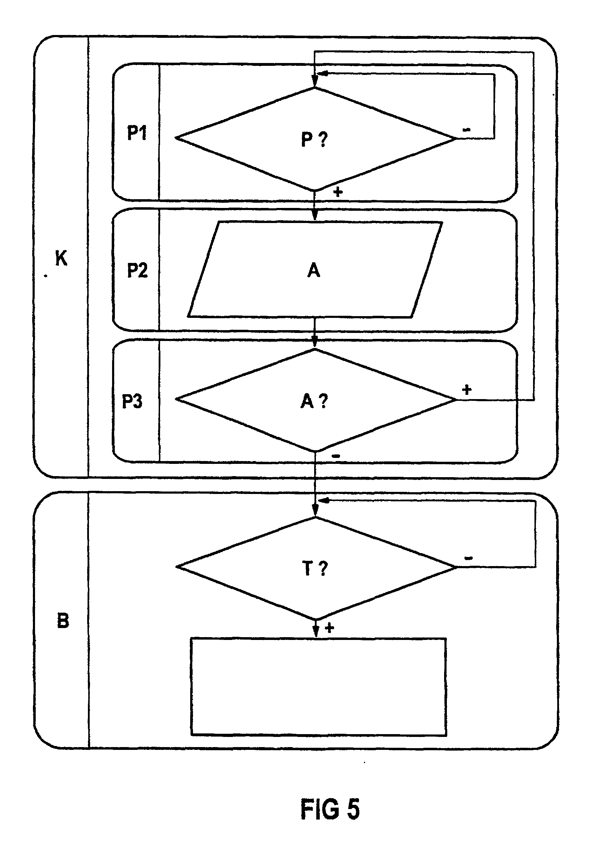

Im Konfigurationsmodus K ist das Umschalten von einer Phase P1, P2, P3 in die nächste Phase P1, P2, P3 nur möglich, wenn die zeitlich vorangehende Phase P1, P2, P3 sicher abgeschlossen wurde. Das Umschalten in den Betriebsmodus B, ausgehend von den Konfigurationsmodus K ist nur möglich, wenn sämtliche drei Phasen P1, P2, P3 des Konfigurationsmodus K in der vorgesehenen Reihenfolge sicher abgeschlossen sind. Den zeitlichen Ablauf der verschiedenen Modi und Phasen, die ein Slave S1, S2, ... während des Ablaufs des erfindungsgemäßen Verfahrens durchläuft, sind abschließend nochmals in FIG 5 dargestellt.

Ein Slave S1, S2, ..., der einem Kommunikationssystem neu zugeordnet werden soll, dem also noch keine Adresse, über die er eineindeutig ansprechbar ist, zugeordnet ist, befindet sich zunächst im Konfigurationsmodus K. Der Konfigurationsmodus K ist in drei zeitlich aufeinander folgende Phase aufteilbar. Während der ersten Phase P1 überwacht der Slave S1, S2,... das Kommunikationsmedium auf das Auftreten einer Präambel P; in FIG 5 als "P ?" dargestellt. Solange keine Präambel P erkannt wird, verbleibt der Slave S1, S2,... in der ersten Phase P1 des Konfigurationsmodus K. Wird agegen die Präambel P erkannt, wird während der zweiten Phase P2 des Konfigurationsmodus K als Antwort auf die Präambel P die Antwortsignalfolge A ausgesandt; in FIG 5 als "A" dargestellt. Nach dem Aussenden der Antwortsignalfolge A überwacht der Slave S1, S2, ... in der dritten Phase P3 des Konfigurationsmodus K während einer vorgebbaren Zeitspanne den Bus auf das Auftreten einer von einem anderen Kommunikationsteilnehmer ausgesandten Antwortsignalfolge A; in FIG 5 als "A ?" dargestellt. Wird während der dritten Phase P3 eine Antwortsignalfolge A erkannt, fällt der Slave S1, S2, ... wieder in die erste Phase P1 des Konfigurationsmodus K zurück. Wird dagegen während der vorgebbaren Zeitspanne - wobei die zeitliche Komponente in der Darstellung gemäß FIG 5 nicht berücksichtigt ist - keine Antwortsignalfolge A erkannt wird aus dem Konfigurationsmodus K in den Betriebsmodus B umgeschaltet. Der Betriebsmodus B ermöglicht den Empfang des Tauftelegramms T vom Master M; in FIG 5 als "T ?" dargestellt. Mit dem Empfang des Tauftelegramms T ist dem betreffenden Slave S1, S2,... eine eindeutige Adresse zuweisbar, über die er während der normalen Operation im Betriebsmodus B ansprechbar ist und damit Telegramme nach dem für das Kommunikationssystem definierten Busprotokoll senden und empfangen kann; in FIG 5 nur schematisch durch die "black box" nach dem Empfang des Tauftelegramms T dargestellt.

Mit den während der normalen Operation empfangenen Telegrammen erfolgt - üblicherweise unmittelbar im Anschluß an die Adreßzuweisung - der normale Zyklus zur Parametrierung eines Slaves (Baudratensuche, Parametrierung, etc.).

Die im Rahmen des erfindungsgemäßen Verfahrens verwendeten Signalfolgen, also z.B. die Präambel P oder die Antwortsignalfolge A, müssen so gewählt werden, daß sie den normalen Kommunikationsbetrieb nicht beeinträchtigen und sicher als Präambel P bzw. als Antwortsignalfolge A erkennbar sind.

Abschließend läßt sich die vorliegende Erfindung zusammenfassen wie folgt kurz darstellen: Es wird ein auf einer Distanzmessung beruhendes Verfahren zur automatischen Adreßvergabe angegeben, wobei ein Master M über den Bus eine Präambel P aussendet, die von sämtlichen zu adressierenden Slaves S1, S2,... empfangen wird. Die Slaves S1, S2,... reagieren auf die Präambel P)mit dem Aussenden einer Antwortsignalfolge A. Ein in Richtung auf den Master M vor einem eine Antwortsignalfolge A aussendenden Slave S3 liegender Slave S2 registriert die Antwortsignalfolge A des Slaves S3 und wartet daraufhin auf eine neue Präambel P. Der Slave SZ, der keine Antwortsignalfolgen A von anderen Slaves S1, S2, ... registriert, ist der vom Master M aus gesehen letzte Slave Sz ohne Adreßzuordnung am Bus. Dieser Slave Sz schaltet sich zum Empfang eines Tauftelegramms T vom Master M bereit, mit dem ihn eine eineindeutige Adresse zugewiesen wird. Beim nächsten Durchlauf des Verfahrens reagiert der gerade getaufte Slave Sz nicht mehr auf die Präambel P, so daß ein anderer Slave S1, S2,... die Konstellationen am Bus derart auswertet, daß er sich für den Empfang des Tauftelegramms T bereitschaltet. Auf diese Weise werden nach und nach sämtliche Slaves S1, S2,... ohne Adresse getauft.

## Patentansprüche

1. Verfahren zur automatischen Adreßvergabe in einem Kommunikationssystem mit mehreren Kommunikationsteilnehmern (M,S1,S2,...) von denen mindestens einer, im folgenden Master (M), eine übergeordnete Funktion wahrnimmt, wobei der Master (M) zur Adreßvergabe eine bestimmte Signalfolge (P), im folgenden Präambel (P), aussendet, die von den verbleibenden Kommunikationsteilnehmern (S1, S2,...), im folgenden Slaves (S1, S2,...), empfangen wird, wobei jeder Slave (S1, S2,...), dem noch keine Adresse zugeordnet wurde, als Antwort auf die Präambel (P) unverzüglich eine Signalfolge (A) aussendet, wobei derjenige Slave (S1, S2,...), der die Präambel (P) zeitlich zuletzt empfängt, anhand der Tatsache, daß nach der von ihm ausgesandten Signalfolge (A) innerhalb einer vorgegebenen Zeit keine weiteren Aktionen in dem Kommunikationssystem stattfinden, erkennt, daß in dem Kommunikationssystem räumlich nach ihm keine weiteren Slaves (S1, S2,...) ohne Adreßzuordnung vorhanden sind und daraufhin in einen normalen Empfangsmodus schaltet, der den Empfang eines Tauftelegramms (T) vom Master (M) ermöglicht, mit dem die Adreßvergabe für diesen Slave (S1, S2,...) erfolgt, wobei die weiteren Slaves (S1, S2,...) ohne Adreßzuordnung, die nach ihrer eigenen Antwort (A) Aktionen in dem Kommunikationssystem erkennen, erneut auf die Präambel (P) des Masters (M) warten.

2. Verfahren nach Anspruch 1, **dadurch gekennzeichnet, daß** der Master (M) anhand der Anzahl der von den Slaves (S1, S2, ...) gesendeten Antworten (A) die Anzahl der Slaves (S1, S2, ...) denen noch keine Adresse zugeordnet ist, erkennt.

3. Verfahren nach Anspruch 1 oder 2, **dadurch gekennzeichnet, daß** der Master (M) nach dem Taufen eines Slaves (S1, S2, ...) erneut eine Präambel (P) aussendet, wenn feststeht, daß in dem Kommunikationssystem noch Slaves (S1, S2, ...) vorhanden sind, denen noch keine Adresse zugeordnet ist.

4. Verfahren nach Anspruch 1, 2 oder 3, **dadurch gekennzeichnet, daß** der Master (M) während des Betriebs des Kommunikationssystems zu vorgebbaren Zeitpunkten bzw. in einem vorgebbaren Zeitraster erneut eine Präambel (P) aussendet.

5. Verfahren nach einem der obigen Ansprüche, **dadurch gekennzeichnet, daß** die Adressen der Slaves (S1, S2, ...) in einer dem Abstand vom Master (M) entsprechenden auf- oder absteigenden Reihenfolge vergeben werden.

6. Verfahren nach nach einem der obigen Ansprüche, **dadurch gekennzeichnet, daß** anhand der Adressen der einzelnen Slaves (S1, S2, ...) eine Abbildung der Topologie der in dem Kommunikationssystem vorhanden Slaves (S1, S2, ...) generiert wird.

7. Kommunikationssystem mit mehreren, für eine automatische Adreßvergabe geeigneten Kommunikationsteilnehmern (M, S1, S2,...), von denen mindestens einer, im folgenden Master (M), eine übergeordnete Funktion wahrnimmt, wobei der Master (M) Mittel zur Aussendung einer bestimmten Signalfolge (P) zur Adreßvergabe, aufweist, wobei die verbleibenden Kommunikationsteilnehmer (S1, S2,...), im folgenden Slaves (S1, S2,...), denen noch keine Adresse zugeordnet wurde, Mittel zur unverzüglichen Aussendung einer Signalfolge (A) als Antwort auf die Präambel (P) aufweisen, wobei jeder Slave (S1, S2, ...) Mittel zur Überwachung des Kommunikationssystems nach dem Empfang der Präambel (P) aufweist, wobei zumindest eine von einem Slave (S1, S2,...) ausgesandte Signalfolge (A) für die anderen Slaves (S1, S2,...) als Aktion in dem Kommunikationssystem ausgewertet wird, wobei das Ausbleiben der Aktion in dem Kommunikationssystem während einer vorgebbaren Zeitspanne für den betreffenden Slave (S1, S2,...) dahingehend ausgewertet wird, daß in dem Kommunikationssystem räumlich nach ihm keine weiteren Slaves (S1, S2,...) ohne Adreßzuordnung vorhanden sind, so daß der betreffende Slave (S1, S2,...) in einen normalen Empfangsmodus geschaltet wird, der den Empfang eines Tauftelegramms (T) vom Master (M) ermöglicht, mit dem die Adreßvergabe für diesen Slave (S1, S2,...) bewirkt wird.

8. Kommunikationssystem nach Anspruch 7, **dadurch gekennzeichnet, daß** vom Master (M) anhand der Anzahl der von den Slaves (S1, S2, ...) gesendeten Antwortsignalfolgen (A) die Anzahl der Slaves (S1, S2,...), denen noch keine Adresse zugeordnet ist, erkannt wird.

9. Kommunikationssystem nach Anspruch 7 oder 8, **dadurch gekennzeichnet, daß** während des Betriebs zu vorgebbaren Zeitpunkten bzw. in einem vorgebbaren Zeitraster durch den Master (M) erneut eine Präambel (P) ausgesendet wird.

10. Kommunikationssystem nach Anspruch 7, 8 oder 9, **dadurch gekennzeichnet, daß** die Adressen der Slaves (S1, S2, ...) in einer dem Abstand vom Master (M) entsprechenden auf- oder absteigenden Reihenfolge vergeben werden.

11. Kommunikationssystem nach Anspruch 7, 8, 9 oder 10, **dadurch gekennzeichnet, daß** anhand der Adressen der einzelnen Slaves (S1, S2, ...) eine Abbildung der Topologie der in dem Kommunikationssystem vorhandenen Slaves (S1, S2, ...) generiert wird.

12. Übergeordneter Kommunikationsteilnehmer, im folgenden Master (M), der zur automatischen Adreßvergabe in einem Kommunikationssystem mit weiteren Kommunikationsteilnehmern (S1, S2, ...), im folgenden Slaves (S1, S2, ...), geeignet ist, wobei der Master (M) zumindest
- Mittel zur Aussendung einer Signalfolge (P) zur Einleitung der Adreßvergabe, im folgenden Präambel (P),
- Mittel zum Empfang einer Antwortsignalfolge (A), die von einem der Slaves (S1, S2,...) als Reaktion auf die Präambel (P) ausgesendet wird, und
- Mittel zur Aussendung eines Tauftelegramms (T) zur Adreßvergabe aufweist.

13. Übergeordneter Kommunikationsteilnehmer nach Anspruch 12, **gekennzeichnet durch** Mittel zur Erkennung der Anzahl der von den Slaves (S1, S2, ...) gesendeten Antwortsignalfolgen (A).

14. Übergeordneter Kommunikationsteilnehmer nach Anspruch 12 oder 13, **dadurch gekennzeichnet, daß** nach dem Taufen eines Slaves (S1, S2, ...) erneut eine Präambel (P) ausgesendet wird, wenn feststeht, daß in dem Kommunikationssystem noch Slaves (S1, S2, ...) vorhanden sind, denen noch keine Adresse zugeordnet ist.

15. Übergeordneter Kommunikationsteilnehmer nach Anspruch 12, 13 oder 14, **dadurch gekennzeichnet, daß** während des Betriebs des Kommunikationssystems zu vorgebbaren Zeitpunkten bzw. in einem vorgebbaren Zeitraster erneut eine Präambel (P) ausgesendet wird.

16. Übergeordneter Kommunikationsteilnehmer nach Anspruch 12, 13, 14 oder 15, **dadurch gekennzeichnet, daß** die Adressen der Slaves (S1, S2, ...) in einer dem Abstand vom Master (M) entsprechenden auf- oder absteigenden Reihenfolge vergeben werden.

17. Übergeordneter Kommunikationsteilnehmer nach Anspruch 13, 14, 15 oder 16, **dadurch gekennzeichnet, daß** anhand der Adressen der Slaves (S1, S2, ...) eine Abbildung der Topologie der in dem Kommunikationssystem vorhanden Slaves (S1, S2, ...) generiert wird.

18. Kommunikationsteilnehmer, im folgenden Slave (S1, S2, ...), der zum Einsatz in einem Kommunikationssystem mit automatischer Adreßvergabe, bewirkbar durch einen übergeordneten Kommunikationsteilnehmer (M), im folgenden Master (M), vorgesehen ist, mit Mitteln zur unverzüglichen Aussendung einer Signalfolge (A) als Antwort auf eine vom Master (M) ausgesandte Präambel (P), Mitteln zur Überwachung des Kommunikationssystems nach dem Empfang der Präambel (P) und Mitteln zum Empfang eines Tauftelegramms (T) vom Master (M), wobei er
- in einem Konfigurationsmodus betrieben wird,
- in dem er zur Aussendung der Signalfolge (A) als Antwort auf die Präambel (P) und zur Überwachung des Kommunikationssystems nach dem Empfang der Präambel (P) geeignet ist,
- wobei zumindest eine von einem anderen Slave (S1, S2, ...) ausgesandte Antwortsignalfolge (A) für den Slave (S1, S2, ...) als Aktion in dem Kommunikationssystem ausgewertet wird und wobei das Ausbleiben der Aktion in dem Kommunikationssystem während einer vorgebbaren Zeitspanne für den Slave (S1, S2, ...) dahingehend ausgewertet wird, daß in dem Kommunikationssystem räumlich nach ihm keine weiteren Slaves (S1, S2, ...) ohne Adreßzuordnung vorhanden sind, und der Slave (S1, S2, ...) daraufhin in einen Betriebsmodus geschaltet wird,
- und dem Betriebsmodus betrieben wird, der mindestens den Empfang des Tauftelegramms (T) ermöglicht, mit dem die Adreßvergabe für den Slave (S1, S2, ...) bewirkt wird.

## Claims

1. Method for automatic address assignment in a communications system having a plurality of communications subscribers (M, S1, S2, ...), at least one of which, referred to below as master (M), performs a superordinate function, the master (M) transmitting, for the address assignment, a specific signal sequence (P), in the following referred to as preamble (P), which signal sequence (P) is received by the remaining communications subscribers (S1, S2, ...), referred to below as slaves (S1, S2, ...), each slave (S1, S2, ...) which has not yet been allocated an address immediately transmits a signal sequence (A) in response to the preamble (P), that slave (S1, S2, ...) which is chronologically the last to receive the preamble (P) detects, from the fact that no further actions take place in the communications system within a predefined time after the signal sequence (A) which was transmitted by it, that there are no further slaves (S1, S2, ...) without address allocation present in the communications system spatially after it, and subsequently switches into a normal reception mode which permits an address-assigning telegram (T) from the master (M) to be received, with which address-assigning telegram (T) the address assignment for this slave (S1, S2, ...) is carried out, the further slaves (S1, S2, ...) without address allocation, which detect actions in the communications system after their own response (A), waiting again for the preamble (P) of the master (M).

2. Method according to Claim 1, **characterised in that**, by reference to the number of responses (A) transmitted by the slaves (S1, S2, ...), the master (M) detects the number of slaves (S1, S2, ...) which has not yet been allocated an address.

3. Method according to Claim 1 or 2, **characterised in that**, after the address-assigning of a slave (S1, S2, ...), the master (M) transmits a preamble (P) again if it is clear that the communications system still contains slaves (S1, S2, ...) which have not yet been allocated an address.

4. Method according to Claim 1, 2 or 3, **characterised in that**, while the communications system is operating, the master (M) transmits a preamble (P) again at predefinable times and/or in a predefinable time pattern.

5. Method according to one of the above claims, **characterised in that** the addresses of the slaves (S1, S2, ...) are assigned in an ascending or descending sequence corresponding to the distance from the master (M).

6. Method according to one of the above claims, **characterised in that** a mapping of the topology of the slaves (S1, S2, ...) present in the communications system is generated by reference to the addresses of the individual slaves (S1, S2,...).

7. Communications system having a plurality of communications subscribers (M, S1, S2,...) which are suitable for an automatic address assignment, at least one of which, referred to below as master (M), performs a superordinate function, the master (M) having means for transmitting a specific signal sequence (P) for address assignment, the remaining communications subscribers (S1, S2, ...), referred to below as slaves (S1, S2, ...) which have not yet been allocated an address having means for immediately transmitting a signal sequence (A) in response to the preamble (P), each slave (S1, S2, ...) having means for monitoring the communications system after the reception of the preamble (P), at least one signal sequence (A) which is transmitted by a slave (S1, S2, ...) and is intended to enable the other slaves (S1, S2, ...) to be evaluated as an action in the communications system, the absence of the action in the communications system during a predefinable time period being capable of being evaluated by the respective slave (S1, S2, ...) to the effect that there are no further slaves (S1, S2, ...) without address allocation spatially after it in the communications system, with the result that the respective slave (S1, S2, ...) can be switched into a normal reception mode which permits an address-assigning telegram (T) from the master (M) to be received, with which address-assigning telegram (T) the address assignment for this slave (S1, S2,...) can be effected.

8. Communications system according to Claim 7, **characterised in that**, by reference to the number of response signal sequences (A) transmitted by the slaves (S1, S2, ...), the master (M) can detect the number of slaves (S1, S2, ...) which have not yet been allocated an address.

9. Communications system according to Claim 7 or 8, **characterised in that**, during operation, the master (M) can transmit a preamble (P) again at predefinable times and/or in a predefinable time pattern.

10. Communications system according to Claim 7, 8 or 9, **characterised in that** the addresses of the slaves (S1, S2, ...) can be assigned in an ascending or descending sequence corresponding to the distance from the master (M).

11. Communications system according to Claim 7, 8, 9 or 10, **characterised in that** a mapping of the topology of the slaves (S1, S2, ...) present in the communications system can be generated by reference to the addresses of the individual slaves (S1, S2, ...).

12. Superordinate communications subscriber, referred to below as master (M), which is suitable for automatic address assignment in a communications system having other communications subscribers (S1, S2,...), referred to below as slaves (S1, S2,...), the master (M) having means at least
- for transmitting a signal sequence (P) in order to initiate the address assignment, referred to below as preamble (P),
- for receiving a response signal sequence (A), which can be transmitted via one of the slaves (S1, S2,...) in reaction to the preamble (P), and
- for transmitting an address-assigning telegram (T) for address assignment.

13. Superordinate communications subscriber according to Claim 12, **characterised by** means for detecting the number of response signal sequences (A) transmitted by the slaves (S1, S2, ...).

14. Superordinate communications subscriber according to Claim 12 or 13, **characterised in that**, after the address-assigning of a slave (S1, S2, ...), a preamble (P) can be transmitted again if it is clear that the communications system still contains slaves (S1, S2, ...) which have not yet been allocated an address.

15. Superordinate communications subscriber according to Claim 12, 13 or 14, **characterised in that**, while the communications system is operating, a preamble (P) can be transmitted again at predefinable times and/or in a predefinable time pattern.

16. Superordinate communications subscriber according to Claim 12, 13, 14 or 15, **characterised in that** the addresses of the slaves (S1, S2, ...) can be assigned in an ascending or descending sequence corresponding to the distance from the master (M).

17. Superordinate communications subscriber according to Claim 13, 14, 15 or 16, **characterised in that** a mapping of the topology of the slaves (S1, S2, ...) present in the communications system can be generated by reference to the addresses of the slaves (S1, S2,...).

18. Communications subscriber, referred to below as slave (S1, S2, ...), which is provided for use in a communications system with automatic address assignment, which can be effected by a superordinate communications subscriber (M), referred to below as master (M), with means for immediate transmission of a signal sequence (A) in response to a preamble (P) transmitted by the master (M), means for monitoring the communications system after the reception of the preamble (P) and means for receiving an address-assigning telegram (T) from the master (M), said master (M)
- being operated in a configuration mode,
- in which it is suitable for transmitting the signal sequence (A) in response to the preamble (P), and for monitoring the communications system after the reception of the preamble (P),
- at least one response signal sequence (A) which is transmitted by another slave (S1, S2, ...) being evaluated for the slave (S1, S2, ...) as an action in the communications system, and the absence of the action in the communications system during a predefinable time period being evaluated for the slave (S1, S2, ...) to the effect that there are no further slaves (S1, S2, ...) without address allocation spatially after it in the communications system, and the slave (S1, S2, ...) is subsequently switched into an operating mode,
- and being operated to the operating mode which at least permits an address-assigning telegram (T) to be received, with which address-assigning telegram (T) the address assignment for the slave (S1, S2, ...) is effected.

## Revendications

1. Procédé d'affectation automatique d'adresses dans un système de communication ayant plusieurs abonnés de communication (M, S1, S2, ...) desquels au moins l'un d'eux, dans ce qui suit le maître (M), assume une fonction de niveau supérieur, le maître (M) émettant pour l'affectation d'adresse une succession de signaux (P) définie, dans ce qui suit préambule (P), qui est reçue par les abonnés de communication restants (S1, S2, ...), dans ce qui suit esclaves (S1, S2, ...), chaque esclave (S1, S2, ...) auquel on n'a pas encore attribué d'adresse émettant immédiatement en réponse au préambule (P) une succession de signaux (A) ; l'esclave (S1, S2, ...) qui reçoit chronologiquement en dernier le préambule (P), en se fondant sur le fait que pendant un laps de temps prédéfini après qu'il a envoyé la succession de signaux (A) aucune autre action n'a lieu dans le système de communication reconnaît que dans le système de communication il n'existe spatialement après lui aucun autre esclave (S1, S2, ...) auquel on n'a pas attribué d'adresse et ensuite passe dans un mode normal de réception qui permet la réception d'un télégramme de dénomination (T) de la part du maître (M) avec lequel l'affectation d'adresse pour cet esclave (S1, S2, ...) a lieu, les autres esclaves (S1, S2, ...) sans attribution d'adresse qui reconnaissent des actions dans le système de communication après leur propre réponse (A), attendant à nouveau le préambule (P) du maître (M).

2. Procédé selon la revendication 1 **caractérisé en ce que** le maître (M) reconnaît le nombre des esclaves (S1, S2, ...) auxquels on n'a pas encore attribué d'adresse à l'aide du nombre des réponses (A) envoyées par les esclaves (S1, S2, ...).

3. Procédé selon la revendication 1 ou 2 **caractérisé en ce qu'**après avoir dénommé un esclave (S1, S2, ...) le maître (M) émet de nouveau un préambule (P) quand il est établi que dans le système de communication il existe encore des esclaves (S1, S2,...) auxquels on n'a pas encore attribué d'adresse.

4. Procédé selon la revendication 1, 2 ou 3 **caractérisé en ce que** pendant le fonctionnement du système de communication le maître (M) émet de nouveau un préambule (P) à des instants qu'on peut prédéterminer ou selon une fréquence chronologique qu'on peut prédéterminer.

5. Procédé selon l'une des revendications précédentes **caractérisé en ce que** les adresses des esclaves (S1, S2, ...) sont affectées selon une succession croissante ou décroissante correspondant à la distance au maître (M).

6. Procédé selon l'une des revendications précédentes **caractérisé en ce que** l'on génère à l'aide des adresses des différents esclaves (S1, S2, ...) une représentation de la topologie des esclaves (S1, S2,...) présents dans le système de communication.

7. Système de communication ayant plusieurs abonnés de communication (M, S1, S2, ...) aptes à une affectation automatique d'adresses desquels au moins un, dans ce qui suit le maître (M), assume une fonction de niveau supérieur, le maître (M) présentant des moyens destinés à émettre une succession de signaux (P) pour l'affectation d'adresse, les abonnés de communication (S1, S2, ...) restants, dans ce qui suit esclaves (S1, S2, ...), auxquels on n'a encore attribué aucune adresse présentant des moyens pour envoyer immédiatement une succession de signaux (A) en réponse au préambule (P), chaque esclave (S1, S2,...) présentant des moyens pour surveiller le système de communication après avoir reçu le préambule (P), dans lequel au moins une succession de signaux (A) émise par un esclave (S1, S2, ...) pour les autres esclaves (S1, S2, ...) est interprétée comme action dans le système de communication, l'absence de l'action dans le système de communication pendant un laps de temps prédéfini pour l'esclave (S1, S2, ...) concerné étant interprétée en ce sens que dans le système de communication il n'existe spatialement après lui aucun autre esclave (S1, S2,...) auquel on n'a pas attribué d'adresse, de sorte que l'esclave concerné (S1, S2, ...) passe dans un mode normal de réception qui permet de recevoir un télégramme de dénomination (T) du maître (M) grâce auquel l'affectation d'adresse peut avoir lieu pour cet esclave (S1, S2, ...).

8. Système de communication selon la revendication 7 **caractérisé en ce que** le nombre des esclaves (S1, S2, ...) auxquels on n'a pas encore attribué d'adresse est reconnu par le maître (M) à l'aide du nombre des successions de signaux en réponse (A) envoyées par les esclaves (S1, S2, ...).

9. Système de communication selon la revendication 7 ou 8 **caractérisé en ce que** pendant le fonctionnement un préambule (P) est de nouveau émis par le maître (M) à des instants qu'on peut prédéterminer ou selon une fréquence chronologique qu'on peut prédéterminer.

10. Système de communication selon la revendication 7, 8 ou 9 **caractérisé en ce que** les adresses des esclaves (S1, S2, ...) sont affectées selon une succession croissante ou décroissante correspondant à la distance au maître (M).

11. Système de communication selon la revendication 7, 8, 9 ou 10 **caractérisé en ce que** l'on génère à l'aide des adresses des différents esclaves (S1, S2, ...) une représentation de la topologie des esclaves (S1, S2, ...) présents dans le système de communication.

12. Abonné de communication de niveau supérieur, dans ce qui suit maître (M), qui est apte à affecter automatiquement des adresses dans un système de communication avec d'autres abonnés de communication (S1, S2,...), dans ce qui suit esclaves (S1, S2, ...), le maître (M) présentant au moins
• des moyens pour émettre une succession de signaux (P) afin d'initier une affectation d'adresse, dans ce qui suit préambule (P),
• des moyens pour recevoir une succession de signaux en réponse (A) qui est envoyée par un des esclaves (S1, S2, ...) en réaction au préambule (P) et
• des moyens pour émettre un télégramme de dénomination (T) afin d'affecter une adresse.

13. Abonné de communication de niveau supérieur selon la revendication 12 **caractérisé par** des moyens pour reconnaître le nombre des successions de signaux en réponse (A) envoyées par les esclaves (S1, S2, ...).

14. Abonné de communication de niveau supérieur selon la revendication 12 ou 13 **caractérisé en ce qu'**après la dénomination d'un esclave (S1, S2, ...) un préambule (P) est de nouveau envoyé lorsqu'il est établi qu'il y a encore dans le système de communication des esclaves (S1, S2, ...) auxquels on n'a pas encore attribué d'adresse.

15. Abonné de communication de niveau supérieur selon la revendication 12, 13 ou 14 **caractérisé en ce que** l'on émet de nouveau un préambule (P) au cours du fonctionnement du système de communication à des instants qu'on peut prédéterminer ou selon une fréquence chronologique qu'on peut prédéterminer.

16. Abonné de communication de niveau supérieur selon la revendication 12, 13, 14 ou 15 **caractérisé en ce que** les adresses des esclaves (S1, S2, ...) sont affectées selon une succession croissante ou décroissante correspondant à la distance au maître (M).

17. Abonné de communication de niveau supérieur selon la revendication 13, 14, 15 ou 16 **caractérisé en ce que** l'on génère à l'aide des adresses des esclaves (S1, S2, ...) une représentation de la topologie des esclaves (S1, S2, ...) présents dans le système de communication.

18. Abonné de communication, dans ce qui suit esclave (S1, S2, ...), qui est prévu pour être utilisé dans un système de communication avec une affectation automatique d'adresses que peut initier un abonné de communication de niveau supérieur (M), dans ce qui suit maître (M), avec des moyens pour émettre immédiatement une succession de signaux (A) en réponse à un préambule (P) envoyé par le maître (M), des moyens pour surveiller le système de communication après avoir reçu le préambule (P) et des moyens pour recevoir un télégramme de dénomination (T) de la part du maître (M) :
• ce dernier fonctionnant dans un mode de configuration,
• en étant apte à émettre immédiatement une succession de signaux (A) en réponse à un préambule (P) que peut envoyer le maître et à surveiller le système de communication après avoir reçu le préambule (P),
• dans lequel au moins une succession de signaux en réponse (A) envoyée par un autre esclave (S1, S2, ...) peut être interprétée par l'esclave (S1, S2, ...) comme une action dans le système de communication et l'absence de l'action dans le système de communication pendant un laps de temps qu'on peut prédéterminer peut être interprétée par l'esclave (S1, S2, ...) en ce sens que dans le système de communication il n'existe spatialement après lui aucun autre esclave (S1, S2, ...) auquel on n'a pas attribué d'adresse du point de vue du maître et l'esclave (S1, S2, ...) peut ensuite passer dans un mode de fonctionnement
• et il peut opérer en mode de fonctionnement qui permet au moins la réception d'un télégramme de dénomination (T) grâce auquel l'affectation d'adresse peut avoir lieu pour cet esclave (S1, S2, ...).
